# EUROPÄISCHE PATENTANMELDUNG

(11) **EP 1 156 098 A2**
(43) Veröffentlichungstag der Anmeldung: **21.11.2001**
(21) Anmeldenummer: 01110171.4
(22) Anmeldetag: 07.05.2001
(51) Int. Cl.: C09K 9/02, G02F 1/15

(54) **Elektrochrome Anzeigevorrichtung mit hoher Kantenschärfe**

(30) Priorität: 15.05.2000 DE 10023744
(71) Anmelder: BAYER AG, 51368 Leverkusen (DE)
(72) Erfinder: Berneth, Horst, Dr., 51373 Leverkusen (DE); Kostromine, Serguei, Dr., 53913 Swisttal (DE); Neigl, Ralf, Dr., 10591-5097 Tarrytown, N.Y. (US)

(57) **Zusammenfassung**

Eine elektrochrome Vorrichtung, enthaltend ein Paar Glas- oder Kunststoffplatten oder Kunststoffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt sein kann, wobei die Platten oder Folien über einen Dichtungsring auf den Seiten ihrer leitfähigen Beschichtung zusammengefügt sind, und das Volumen, gebildet aus den beiden Platten oder Folien und dem Dichtungsring, mit einem elektrochromen Medium gefüllt ist, dadurch gekennzeichnet, dass das elektrochrome Medium ein Paar elektrochromer Substanzen OX₂ⁿ⁺ und RED₁^{m-} enthält,
worin
- n und m: unabhängig voneinander eine ganze Zahl von 2 bis 4 bedeuten,
löst das Problem der unscharfen Abbildung durch Diffusion.

## Beschreibung

Gegenstand der Erfindung ist eine elektrochrome Vorrichtung sowie elektrochrome Substanzen.

Elektrochrome Vorrichtungen sind bereits bekannt, beispielsweise aus D. Theis in Ullmann's Encyclopedia of Industrial Chemistry, Vol. A 8, S. 622, Verlag Chemie 1987 und WO-A 94/23333. Man unterscheidet zwei Grundtypen:
- Typ 1:: vollflächige elektrochrome Vorrichtung
- Typ 2:: elektrochrome Anzeigevorrichtungen mit strukturierten Elektroden

Typ 1 findet beispielsweise bei elekrisch abdunkelbaren Fensterscheiben oder elektrisch abblendbaren Autospiegeln Anwendung. Solche Vorrichtungen sind beispielsweise aus US-A 4 902 108 bekannt.

Typ 2 findet bei Segment- und Matrixanzeigen Verwendung. Solche Anzeigevorrichtungen sind beispielsweise in der Deutschen Patentanmeldung DE-A 196 31 728 vorgeschlagen worden. Derartige Vorrichtungen können transmissiv oder bei Verspiegelung reflektiv betrachtet werden.

In WO-A 94/23333 werden elektrochrome Materialien verschiedener Bauweisen gegenübergestellt, die aber nicht als Anzeigevorrichtungen verwendet werden:
- Bauweise a:: Die elektrochromen Substanzen liegen als Film oder Schicht fest auf den Elektroden (vgl. Ullmann, s.o.).
- Bauweise b:: Die elektrochromen Substanzen werden beim Redoxprozeß auf den Elektroden als Schicht abgeschieden (vgl. Ullmann, s.o.).
- Bauweise c:: Die elektrochromen Substanzen bleiben permanent in Lösung.

Für Bauweise a) ist als elektrochromes Material das Paar Wolframoxid/Palladium-hydrid das bekannteste.

Für Bauweise b) sind Viologene als elektrochrome Substanzen beschrieben worden. Diese Vorrichtungen sind nicht selbstlöschend, das erzeugte Bild bleibt also nach dem Abschalten des Stromes bestehen und kann nur durch Umpolen der Spannung wieder gelöscht werden. Solche Vorrichtungen sind nicht besonders beständig und erlauben keine hohe Zahl an Schaltzyklen.

Zudem sind insbesondere solche mit Wolframoxid/Palladiumhydrid aufgebauten Zellen wegen der Lichtstreuung an diesen elektrochromen Schichten nicht im durchfallenden Licht zu betreiben, sondern lediglich reflektiv.

Aus Elektrokhimiya, **13**, 32-37 (1977), **13,** 404-408, **14,** 319-322 (1978), US-A 4 902 108 und US-A 5 140 455 ist ein elektrochromes System dieser letztgenannten Bauweise c) bekannt. In einer elektrochromen Zelle, die aus leitfähig beschichteten Glasplatten aufgebaut ist, ist eine Lösung eines Paares elektrochromer Substanzen in einem inerten Lösungsmittel enthalten.

Als Paar von elektrochromen Substanzen wird je eine elektrochemisch reversibel reduzierbare und eine reversibel oxidierbare Substanz verwendet. Beide sind im Grundzustand farblos oder nur schwach gefärbt. Unter Einfluß einer elektrischen Spannung wird die eine Substanz reduziert, die andere oxidiert, wobei beide farbig werden. Nach Abschalten der Spannung bildet sich bei beiden Substanzen der Grundzustand wieder zurück, wobei Entfärbung bzw. Farbaufhellung auftritt.

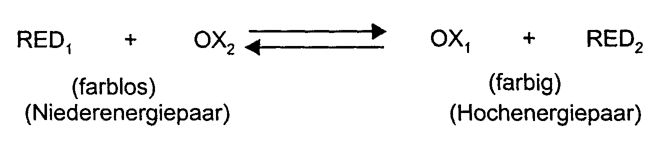

Aus US-A 4 902 108 ist bekannt, dass solche Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Gemäß WO-A 94/23333 haben derartige Lösungssysteme der Bauweise c jedoch gravierende Nachteile.

Die Diffusion der elektrochromen Substanzen in der Lösung bedingt unscharfe Farbgrenzen und verursacht einen hohen Stromverbrauch zur Aufrechterhaltung des gefärbten Zustandes, da die gefärbten Substanzen durch Rekombination und Reaktion an der jeweils gegenüberliegenden Elektrode permanent abgebaut werden.

Dennoch sind für solche elektrochromen Zellen der Bauweise c verschiedene Anwendungen beschrieben worden. So können sie beispielsweise als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (vgl. z. B. US-A 3 280 701, US-A 4 902 108, EP-A 0 435 689). Weiterhin können solche Zellen auch in Fensterscheiben oder Auto-Sonnendächern eingesetzt werden, wo sie nach Anlegen einer Spannung das Sonnenlicht abdunkeln. Ebenfalls beschrieben ist die Anwendung solcher Vorrichtungen als elektrochrome Anzeigevorrichtungen, beispielsweise in Segment- oder Matrix-Displays mit strukturierten Elektroden (DE-A 196 31 728).

Die elektrochromen Zellen bestehen normalerweise aus einem Paar Glasplatten, von denen im Falle des Autospiegels eine verspiegelt ist. Eine Seite dieser Scheiben ist mit einer lichtdurchlässigen, elektrisch leitfähigen Schicht, beispielsweise Indium-Zinn-Oxid (ITO), flächig beschichtet, wobei im Falle der Anzeigevorrichtungen diese leitfähige Beschichtung in elektrisch voneinander getrennte Segmente aufgeteilt ist, die einzeln kontaktiert sind. Aus diesen Scheiben wird nun eine Zelle aufgebaut, indem sie mit ihrer einander zugewandten elektrisch leitfähig beschichteten Seite über einen Dichtungsring zu einer Zelle verbunden werden. In diese Zelle wird nun über eine Öffnung eine elektrochrome Flüssigkeit eingefüllt und die Zelle dicht verschlossen. Über die ITO-Schichten werden die beiden Scheiben mit einer Spannungsquelle verbunden.

Insbesondere bei elektrochromen Anzeigevorrichtungen besteht das Problem unscharfer Abbildung durch Diffusion, insbesondere laterale Diffusion der an den Elekroden gebildeten farbigen Formen der elekrochromen Substanzen. Damit verbunden ist auch ein Problem bei der Selbstlöschung der Vorrichtung nach Abschalten des Stroms gemäß obigem Schema.

Es bestand demnach Bedarf an einem elektrochromen Medium und den darin enthaltenen elektrochromen Substanzen, bei dem eine solche insbesondere laterale Diffusion unterbunden ist, ohne die vertikale Diffusion zu unterbinden.

Es wurde nun gefunden, dass ein elektrochromes Medium, das ein Paar elektrochromer Substanzen OX₂ⁿ⁺ und RED₁^{m-} enthält,
worin
- n und m: unabhängig voneinander eine ganze Zahl von 2 bis 4 bedeuten,

dieses Problem löst.

Insbesondere ist mit n und m 2 gemeint.

Gegenstand der Erfindung ist daher eine elektrochrome Vorrichtung, enthaltend ein Paar Glas- oder Kunststoffplatten oder Kunststoffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt sein kann, wobei die Platten oder Folien über einen Dichtungsring auf den Seiten ihrer leitfähigen Beschichtung zusammengefügt sind, und das Volumen, gebildet aus den beiden Platten oder Folien und dem Dichtungsring, mit einem elektrochromen Medium gefüllt ist, dadurch gekennzeichnet, dass das elektrochrome Medium ein Paar elektrochromer Substanzen OX₂ⁿ⁺ und RED₁^{m-} enthält,
worin
- n und m: unabhängig voneinander eine ganze Zahl von 2 bis 4 bedeuten.

In einer bevorzugten Ausführungsform der Erfindung bedeuten n und m 2.

In einer weiteren bevorzugten Ausführungsform der Erfindung ist wenigstens bei einer der beiden Platten oder Folien die elektrisch leitfähige Schicht in getrennte, einzeln kontaktierte Flächensegmente aufgeteilt.

Im allgemeinen ist mit der reduzierbaren Substanz OX₂ⁿ⁺ eine solche gemeint, die mindestens eine, vorzugsweise wenigstens zwei chemisch reversible Reduktionswellen im cyclischen Voltammogramm besitzt, und mit der oxidierbaren Substanz RED₁^{m-} entsprechend eine solche gemeint, die mindestens eine, vorzugsweise wenigstens zwei chemisch reversible Oxidationswellen besitzt.

Verbunden mit diesen Reduktions- bzw. Oxidationsprozessen, insbesondere mit der Einelektronenreduktion bzw. -oxidation ist in der Regel eine Veränderung der Absorption der elektrochromen Substanzen im sichtbaren Teil des Spektrums verbunden. Wenigstens bei einer der beiden elekrochromen Substanzen OX₂ⁿ⁺ bzw. RED₁^{m-} ist eine solche Veränderung der Absorption erforderlich. Beispielsweise können OX₂ⁿ⁺ bzw. RED₁^{m-} farblos oder schwach gefärbt sein und durch Reduktion bzw. Oxidation farbig werden oder umgekehrt. Es kann sich aber auch die Farbe ändern, beispielsweise von rot nach blau.

Das durch Einelektronenreduktion von OX₂ⁿ⁺ an der Kathode gebildete, eventuell farbige Produkt trägt die Ladung (n-1)+, das an der Anode durch Einelektronenoxidation von RED₁^{m-} gebildete, eventuell farbige Produkt trägt die Ladung (m-1)-. Das heißt, dass sich bei der Oxidation bzw. Reduktion zwar die Höhe der Ladung ändert, nicht aber ihr Vorzeichen.

Elektrochrome Substanzen des Typs OX₂ⁿ⁺ sind in vielen strukturellen Varianten bekannt, z. B. aus der oben zitierten Literatur. Im Sinne der Erfindung geeignete OX₂ⁿ⁺ sind 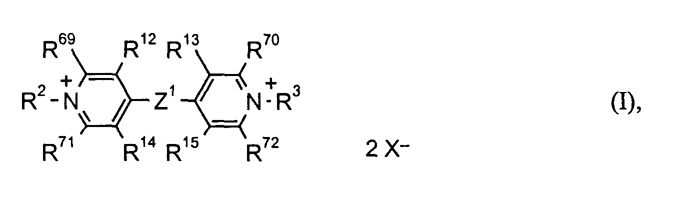 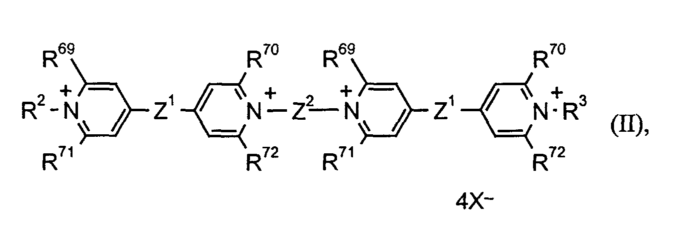 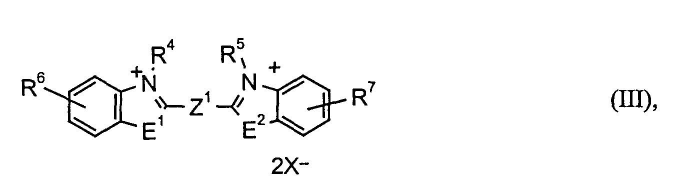 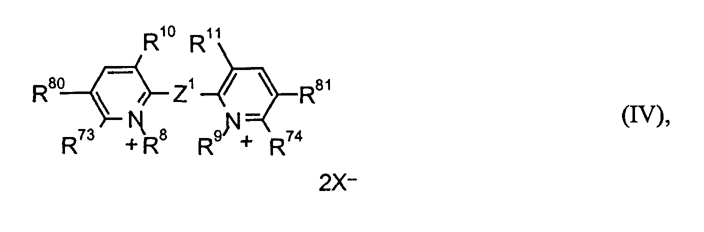 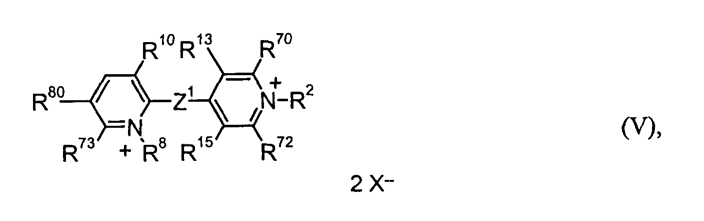 worin
- R² bis R⁵, R⁸ und R⁹: unabhängig voneinander C₁- bis C₁₈-Alkyl, C₂- bis C₁₂-Alkenyl, C₄- bis C₇-Cycloalkyl, C₇- bis C₁₅-Aralkyl oder C₆-bis C₁₀-Aryl bedeuten oder
- R⁴; R⁵ bzw. R⁸; R⁹: gemeinsam eine -(CH₂)₂- oder -(CH₂)₃-Brücke bilden können,
- R⁶ und R⁷: unabhängig voneinander Wasserstoff, C₁- bis C₄-Alkyl, C₁- bis C₄-Alkoxy, Halogen, Cyan, Nitro oder C₁- bis C₄-Alkoxycarbonyl bedeuten,
- R¹⁰; R¹¹, R¹⁰; R¹³, R¹²; R¹³ und R¹⁴; R¹⁵: unabhängig voneinander Wasserstoff oder paarweise eine -(CH₂)₂-, -(CH₂)₃- oder -CH=CH-Brücke bedeuten,
- R⁶⁹ bis R⁷⁴, R⁸⁰ und R⁸¹: unabhängig voneinander Wasserstoff oder C₁- bis C₆-Alkyl bedeuten und
- R⁶⁹ bis R⁷⁴: unabhängig voneinander zusätzlich Aryl bedeuten oder
- R⁶⁹; R¹², R⁷⁰; R¹³, R⁷³; R⁸⁰ und/oder R⁷⁴; R⁸¹: gemeinsam eine -CH=CH-CH=CH-Brücke bilden,
- E¹ und E²: unabhängig voneinander O, S, NR¹ oder C(CH₃)₂ bedeuten oder
- E¹ und E²: gemeinsam eine -N-(CH₂)₂-N-Brücke bilden,
- R¹: C₁- bis C₁₈-Alkyl, C₂- bis C₁₂-Alkenyl, C₄- bis C₇-Cycloalkyl, C₇- bis C₁₅-Aralkyl, C₆- bis C₁₀-Aryl bedeutet,
- Z¹: eine direkte Bindung, -CH=CH-, -C(CH₃)=CH-, -C(CN)=CH-, -CCl=CCl-, -C(OH)=CH-, -CCl=CH-, -C≡C-, -CH=N-N=CH-, -C(CH₃)=N-N=C(CH₃)-, -CCl=N-N=CCl- oder -C₆H₄- bedeutet,
- Z²: -(CH₂)ᵣ- oder -CH₂-C₆H₄-CH₂- bedeutet,
- r: eine ganze Zahl von 1 bis 10 bedeutet und
- X⁻: ein unter den Bedingungen redox-inertes Anion bedeutet.

Bevorzugte Beispiele sind die Viologene der Formeln 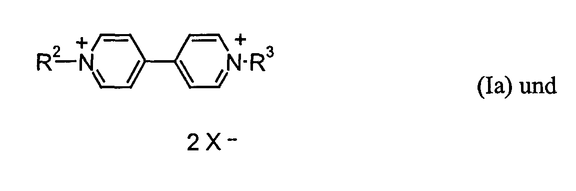 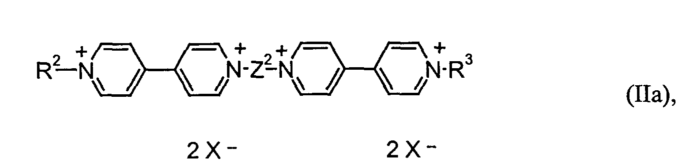 worin
- R² und R³: C₁- bis C₁₂-Alkyl, C₇- bis C₁₂-Aralkyl oder C₆- bis C₁₀-Aryl bedeuten,
- Z²: -(CH₂)₃-, -(CH₂)₄-, -(CH₂)₅- oder -CH₂-C₆H₄-CH₂- bedeutet und
- X⁻: ein Anion bedeutet.

Besonders bevorzugt stehen
- R² und R³: für Methyl, Ethyl, Propyl, Butyl, Heptyl, 2-Ethyl-hexyl, Benzyl, Phenethyl oder Phenylpropyl und
- Z²: für -(CH₂)₃-, -(CH₂)₄- oder o-(-CH₂-C₆H₄-CH₂-).
- X⁻: kann aber auch ein Äquivalent von RED₁^{m-} bedeuten.

Elektrochrome Substanzen des Typs RED₁^{m-} sind nur wenige bekannt, z. B. solche der Formel 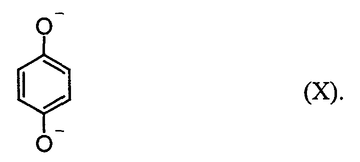 Vorteilhaft gegenüber elektrochromen Substanzen der Formel (X) sind RED₁^{m-} der allgemeinen Formel 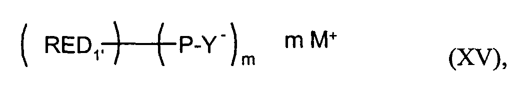 worin
- RED_{1'}: den m-wertigen Rest einer reversibel oxidierbaren elektrochromen Verbindung bedeutet,
- P: eine Brücke bedeutet,
- Y⁻: eine anionische Gruppierung bedeutet,
- M⁺: ein Kation bedeutet und
- m: eine ganze Zahl von 2 bis 4, vorzugsweise 2 bedeutet.

Geeignete RED_{1'} sind beispielsweise aus der DE-A 196 31 728 bekannt: 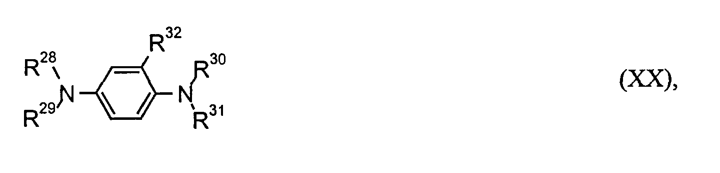 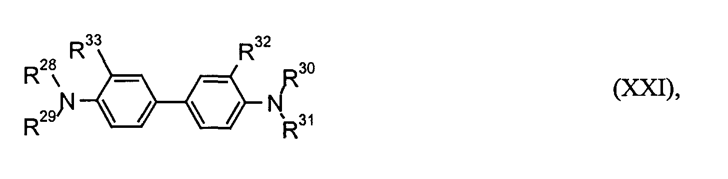 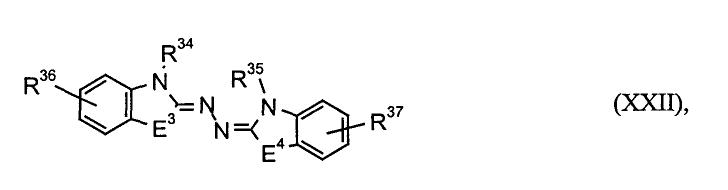 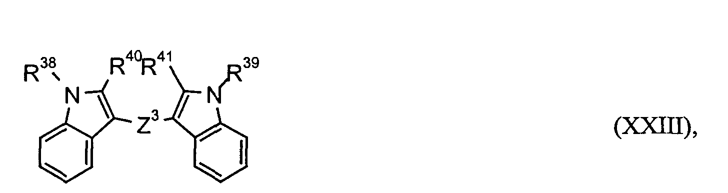 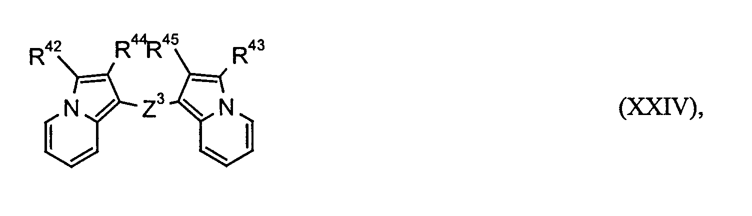 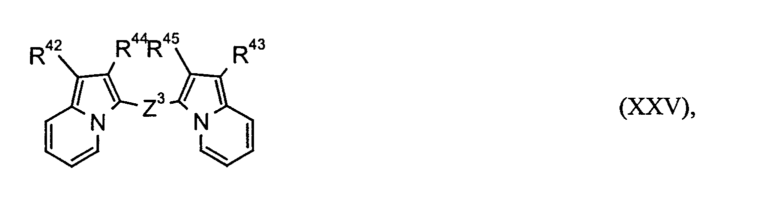 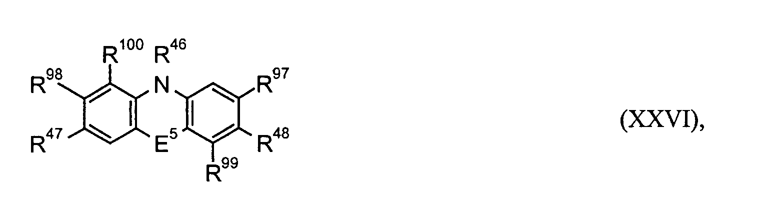 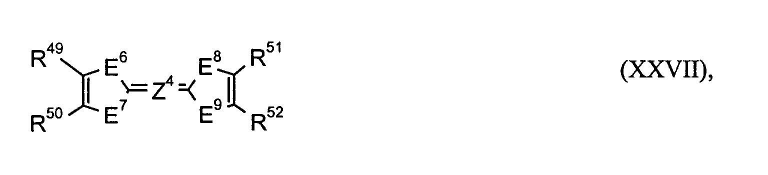 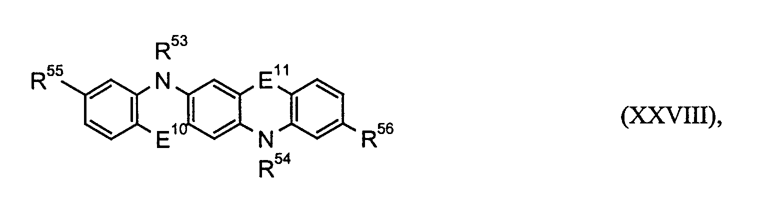 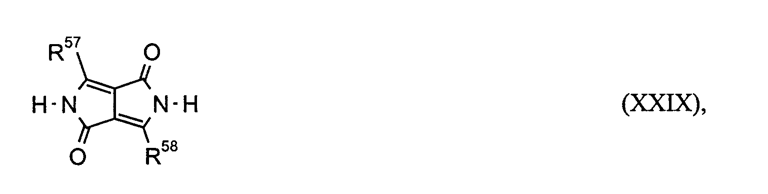 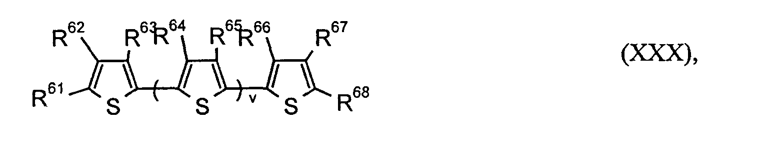 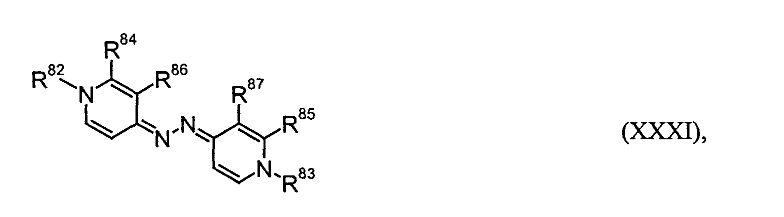 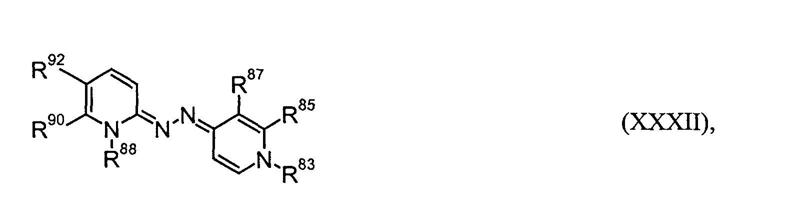 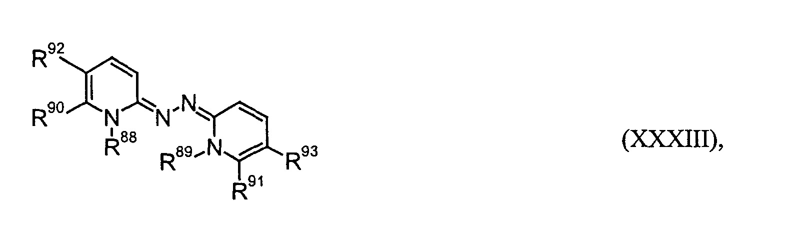 worin
- R²⁸ bis R³¹, R³⁴, R³⁵, R³⁸, R³⁹, R⁴⁶, R⁵³ und R⁵⁴: unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
- R³², R³³, R³⁶, R³⁷, R⁴⁰, R⁴¹, R⁴² bis R⁴⁵, R⁴⁷, R⁴⁸, R⁴⁹ bis R⁵², R⁵⁵ bis R⁵⁸ und R⁹⁷ bis R¹⁰⁰: unabhängig voneinander Wasserstoff, C₁- bis C₄-Alkyl, C₁- bis C₄-Alkoxy, Halogen, Cyan, Nitro, C₁- bis C₄-Alkoxycarbonyl, C₆- bis C₁₀-Aryl oder C₆- bis C₁₀-Aryloxy bedeuten
und
- R⁵⁷ und R⁵⁸: zusätzlich einen aromatischen oder quasiaromatischen fünf- oder sechsgliedrigen heterocyclischen Ring, der gegebenenfalls benzanneliert ist, bedeuten und R⁴⁸ zusätzlich NR⁷⁵R⁷⁶ bedeutet oder
- R⁴⁹; R⁵⁰, R⁵¹; R⁵² und/oder R⁴⁸; R⁹⁷ oder R⁴⁸; R⁹⁹, R⁹⁷; R⁹⁸ oder R⁹⁸; R¹⁰⁰: unabhängig voneinander eine -(CH₂)₃-, -(CH₂)₄-, -(CH₂)₅- oder -CH=CH-CH=CH-Brücke bilden,
- Z³: eine direkte Bindung, eine -CH=CH- oder -N=N-Brücke bedeutet,
- =Z⁴=: eine direkte Doppelbindung, eine =CH-CH= oder =N-N=-Brücke bedeutet,
- E³ bis E⁵, E¹⁰ und E¹¹: unabhängig voneinander O, S, NR⁵⁹ oder C(CH₃)₂ bedeuten und
- E⁵: zusätzlich C=O oder SO₂ bedeutet,
- E³ und E⁴: unabhängig voneinander zusätzlich -CH=CH- bedeuten können,
- E⁶ bis E⁹: unabhängig voneinander S, Se oder NR⁵⁹ bedeuten,
- R⁵⁹, R⁷⁵ und R⁷⁶: unabhängig voneinander C₁- bis C₁₂-Alkyl, C₂- bis C₈-Alkenyl, C₄-bis C₇-Cycloalkyl, C₇- bis C₁₅-Aralkyl, C₆- bis C₁₀-Aryl bedeuten,
und
- R⁷⁵: zusätzlich Wasserstoff bedeutet oder R⁷⁵ und R⁷⁶ in der Bedeutung von NR⁷⁵R⁷⁶ gemeinsam mit dem N-Atom, an das sie gebunden sind, einen fünfoder sechsgliedrigen Ring bedeuten, der gegebenenfalls weitere Heteroatome enthält,
- R⁶¹ bis R⁶⁸: unabhängig voneinander Wasserstoff, C₁- bis C₆-Alkyl, C₁- bis C₄-Alkoxy, Cyan, C₁- bis C₄-Alkoxycarbonyl oder C₆- bis C₁₀-Aryl bedeuten und
- R⁶¹; R⁶² und R⁶⁷; R⁶⁸: unabhängig voneinander zusätzlich eine -(CH₂)₃-, -(CH₂)₄- oder -CH=CH-CH=CH-Brücke bilden oder
- R⁶²; R⁶³, R⁶⁴; R⁶⁵ und R⁶⁶; R⁶⁷: eine -O-CH₂CH₂-O- oder -O-CH₂CH₂CH₂-O-Brücke bilden,
- v: eine ganze Zahl zwischen 0 und 100 bedeutet,
- R⁸², R⁸³, R⁸⁸ und R⁸⁹: unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
- R⁸⁴ bis R⁸⁷ und R⁹⁰ bis R⁹³: unabhängig voneinander Wasserstoff oder C₁- bis C₆-Alkyl bedeuten oder
- R⁸⁴; R⁸⁶, R⁸⁵; R⁸⁷, R⁹⁰; R⁹² und/oder R⁹¹; R⁹³: gemeinsam eine -CH=CH-CH=CH-Brücke bilden.

Ein geeignetes RED_{1'} ist auch Ferrocen.

Jeder der in diesen Formeln aufgeführten Reste kann zusätzlich eine Bindung zu P bedeuten, wobei m (= 2 bis 4, vorzugsweise 2) dieser Reste diese Bedeutung besitzen.

P steht vorzugsweise für eine direkte Bindung, -(CH₂)ₚ-, -(CH₂)_{q}-O-(CH₂)ₛ-, (CH₂)_{q}-C₆H₄-(CH₂)ₛ- oder -C₆H₄-, worin p, q und s unabhängig voneinander für eine ganze Zahl von 1 bis 12, bevorzugt von 2 bis 4 stehen und q oder s auch 0 sein können.

Y⁻ steht vorzugsweise für SO₃⁻, OSO₃⁻, COO⁻, PO₃⁻, OPO₂⁻ oder für einen Rest der Formel 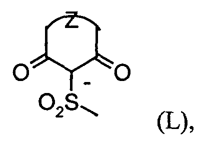 oder einer mesomeren Form davon,
worin
- Z: für eine Brücke steht, beispielsweise für -O-C(R¹⁰¹R¹⁰²)-O-, -N(R¹⁰³)-CO-N(R¹⁰⁴)-, -N(R¹⁰³)-SO₂-N(R¹⁰⁴)- steht,
wobei
- R¹⁰¹ bis R¹⁰⁴: unabhängig voneinander für Alkyl oder Aryl stehen.
- Y⁻: steht besonders bevorzugt für SO₃⁻.

M⁺ steht vorzugsweise für ein Ion eines Alkalimetalls, beispielsweise Li⁺, Na⁺, K⁺, für ein Ammoniumion, beispielsweise Tetramethylammonium, Tetraethylammonium, Tetrabutylammonium, Methyl-tricaprylammonium, Benzyltriethylammonium, oder für ein Äquivalent von OX₂^{m+}.

Besonders bevorzugte RED₁^{m-} sind 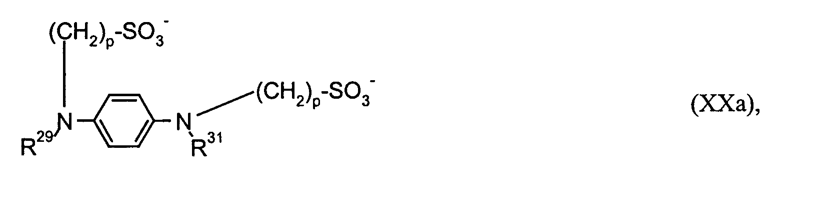 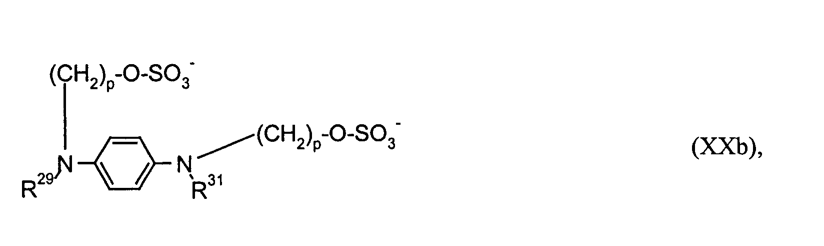 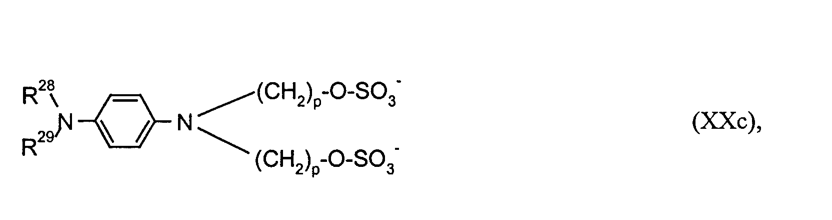 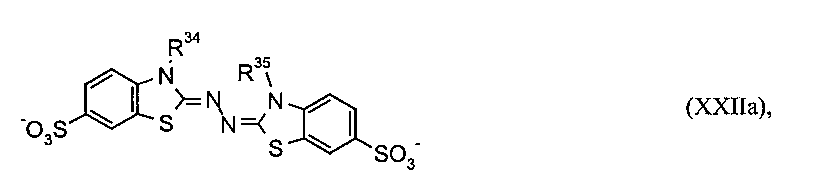 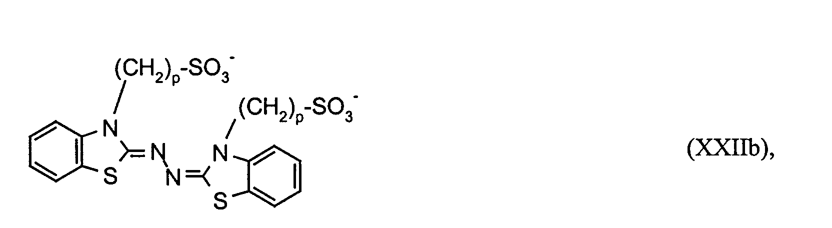 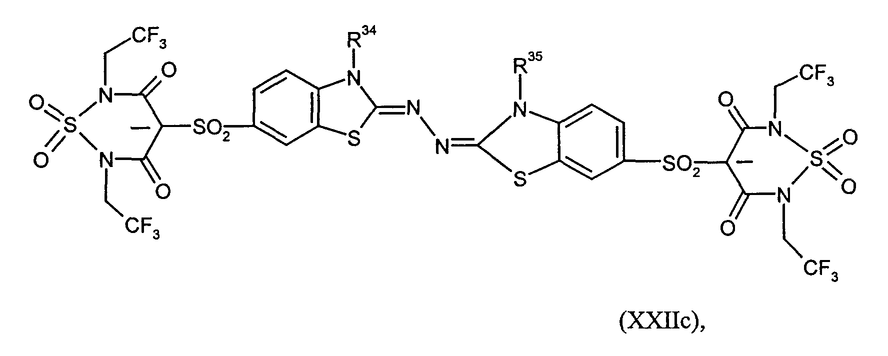 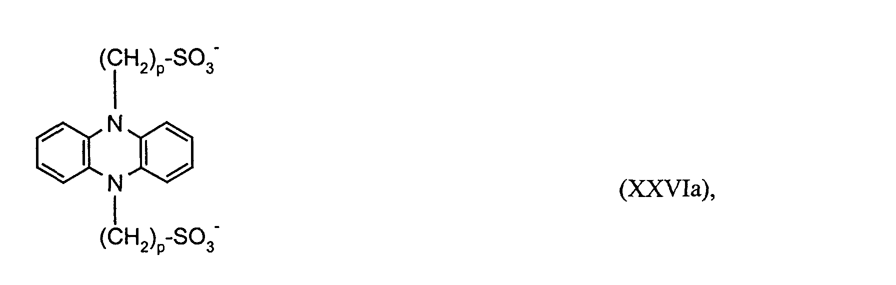 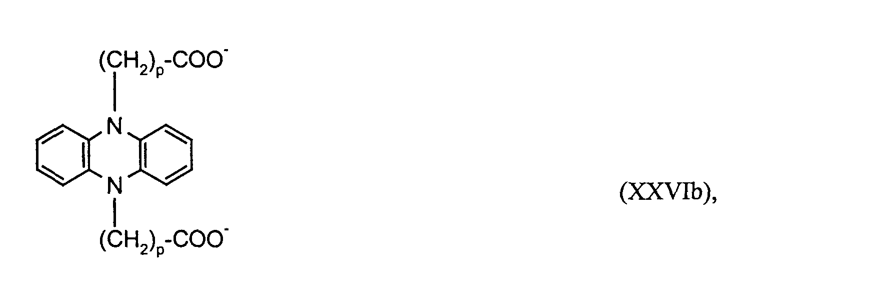 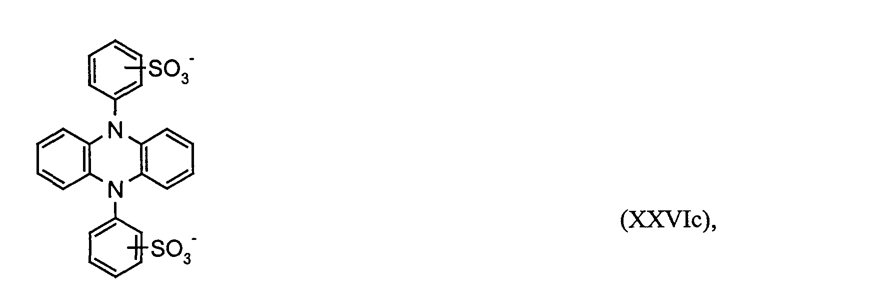 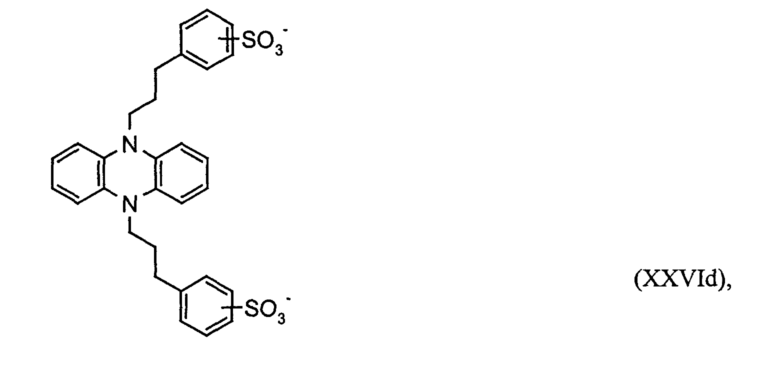 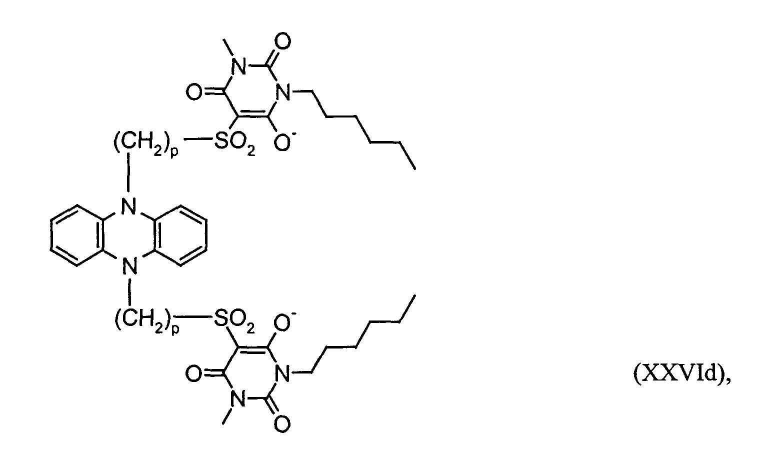 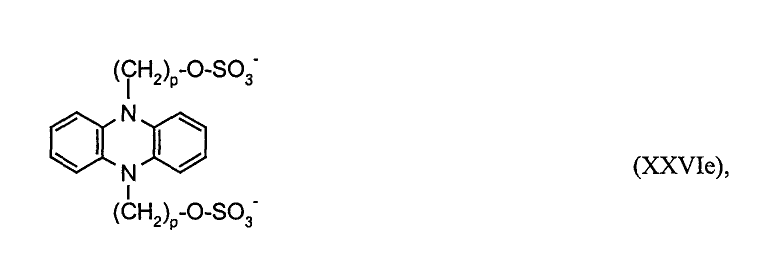 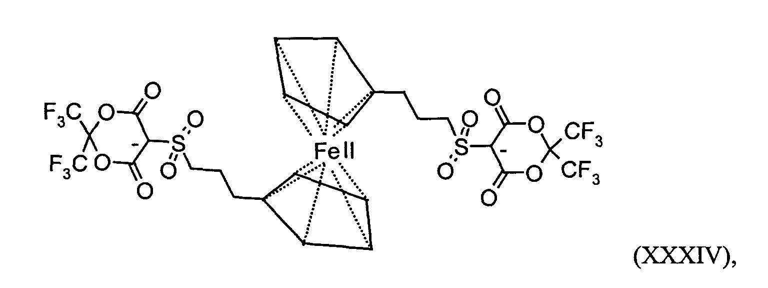 worin
p, R²⁸, R²⁹, R³¹, R³⁴ und R³⁵ die oben angegebene Bedeutung besitzen.

Im Sinne der Erfindung ebenfalls geeignet sind elektrochrome Verbindungen der Formel 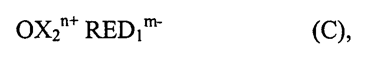 worin m und n gleich sind, bevorzugt jeweils 2 bedeuten, und
- OX₂ⁿ⁺ und RED₁^{m-}: eine der oben angegebenen allgemeinen oder bevorzugten oder besonders bevorzugten Bedeutungen besitzen.

Besonders bevorzugt sind elektrochrome Verbindungen der Formel 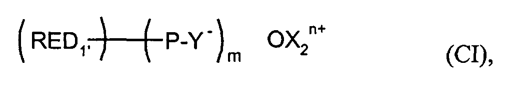 worin
- RED_{1'}, P, Y⁻ und OX₂ⁿ⁺: die oben angegebenen Bedeutungen besitzen und m und n 2 bedeuten.

Ein Beispiel ist

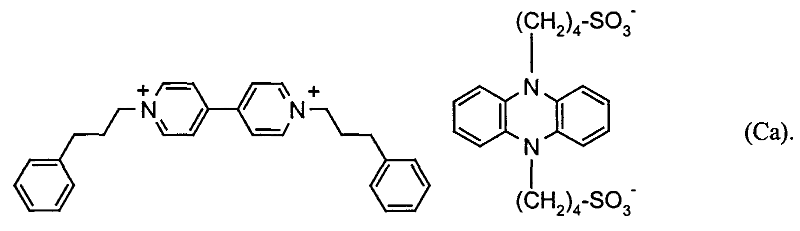

Ein weiterer Gegenstand der Erfindung sind elektrochrome Verbindungen RED₁ der Formel 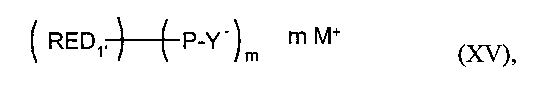 worin
- RED_{1'}, P, Y⁻, m und M⁺: die oben angegebene allgemeine, bevorzugte und besonders bevorzugte Bedeutung besitzen.

Einige elektrochrome Verbindungen der Formel (XV) sind bereits bekannt, z. B. (XXIIa) und (XXIIc) mit R³⁴ und R³⁵ = Ethyl sowie (XXXIV) (WO 98/29396).

Ein weiterer Gegenstand der Erfindung sind elektrochrome Verbindungen der Formel 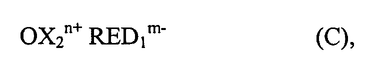 worin
- m und n: gleich sind, bevorzugt jeweils 2 bedeuten, und
- OX₂ⁿ⁺ und RED₁^{m-}: eine der oben angegebenen allgemeinen oder bevorzugten oder besonders bevorzugten Bedeutungen besitzen.

Ein weiterer Gegenstand der Erfindung ist ein Verfahren zur Herstellung der erfindungsgemäßen elektrochromen Verbindungen der Formel (XV), in der RED₁, für einen bivalenten Rest der Formeln (XX), (XXI), (XXIII), (XXVI) und (XXVIII) steht, wobei die Reste R²⁸, R³⁰, R³⁸, R³⁹, R⁴⁶, R⁵⁹, R⁵³ und R⁵⁴ für eine direkte Bindung zu P stehen, dadurch gekennzeichnet, dass man die Verbindungen der Formeln (XX), (XXI), (XXIII), (XXVI) und (XXVIII), wobei die Reste R²⁸, R³⁰, R³⁸, R³⁹, R⁴⁶, R⁵⁹, R⁵³ und R⁵⁴ für Wasserstoff stehen, in Gegenwart einer Base mit einem Alkylierungsmittel F-P-Y- umsetzt,
wobei
- F: für eine Abgangsgruppe steht und
- P und Y⁻: die oben angegebene Bedeutung besitzen.
- F: steht beispielsweise für Cl, Br, I, OSO₂CH₃.

Beispiele sind Chloressigsäure, 3-Brompropionsäure, 2-Chlorethansulfonsäure, 4-Chlorbutansulfonsäure, 4-Chlormethylbenzolsulfonsäure.

Als Alkylierungsmittel kommen insbesondere auch solche in Frage, bei denen F und Y eine funktionale Einheit bilden, schließlich aber zur Ausbildung eines -P-Y⁻-Substituenten führen. Beispiele sind cyclische Sulfonsäureester wie Propansulton und Butansulton.

Geeignete Basen sind Alkali- und Erdalkalihydroxide, -oxide, carbonate oder -alkoholate, beispielsweise Natriumhydroxid, Kaliumhydroxid, Magnesiumoxid, Natriumcarbonat, Natriumhydrogencarbonat, Natriummethylat, Kalium-tert.-butylat.

Geeignete Lösungsmittel sind alle Lösungsmittel, die nicht mit dem Alkylierungsmittel reagieren. Beispiele sind Toluol, Chlorbenzol, Dimethylformamid, N-Methylpyrrolidon, Acetonitril, Dioxan, Tetrahydrofuran, Sulfolan, Essigsäureethylester. Gegebenenfalls können beispielsweise zur Verbesserung der Löslichkeit Wasser oder Alkohole zugesetzt werden.

Gegebenenfalls können auch Phasentransferkatalysatoren zugesetzt werden, beispielsweise Tetrabutylammoniumbromid, Trimethylbenzylammoniumchlorid, Methyl-tricaprylammoniumchlorid.

Gegebenenfalls können auch Iodid-ionen zugesetzt werden, beispielsweise in Form von Kaliumiodid oder Tetrabutylammoniumiodid.

Die Umsetzung erfolgt bei Raumtemperatur bis zum Siedepunkt des Mediums, vorzugsweise bei 40 bis 120°C.

In bestimmten Fällen, z. B. solchen der Formel (XXVI) mit R⁴⁶ und R⁵⁹ = Wasserstoff, sind die Ausgangsmaterialien nicht oder nur sehr schwierig direkt zugänglich. Dann geht man vorteilhaft so vor, dass man diese Materialien direkt vor oder während der Alkylierung erzeugt. Im Falle von (XXVI) geht man von entsprechenden Phenazinen aus und reduziert diese während der Alkylierung mit geeigneten Reduktionsmitteln, beispielsweise Natriumdithionit. Man kann aber auch so vorgehen, dass man die Phenazine direkt zu den alkylierbaren Anionen (bei (XXVI) R⁴⁶ und R⁵⁹ = negative Ladung) reduziert und diese dann mit dem Alkylierungsmittel der Formel F-P-Y⁻ umsetzt. Eine solche Reduktion kann beispielsweise mit Alkali- oder Erdalkalimetallen oder ihren Amalgamen erfolgen, beispielsweise Natrium, Natrium/Kalium oder Natriumamalgam. Geeignete Lösungsmittel für diesen Fall sind Ether wie Tetrahydrofüran, Dioxan, Ethylenglycoldimethylether, Ethylenglycoldiethylether.

Die erfindungsgemäße elektrochrome Vorrichtung enthält in ihrem elektrochromen Medium vorzugsweise mindestens ein Lösungsmittel, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Benzonitril, Dimethylformamid, N-Methylpyrrolidon, Sulfolan, 3-Methylsulfolan oder Mischungen davon. Bevorzugt sind Propylencarbonat und Mischungen davon mit Glutaronitril oder 3-Methylsulfolan.

Die elektrochrome Lösung kann mindestens ein inertes Leitsalz enthalten.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen X⁻ in den Formeln (I) bis (V) kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat, Trifluormethylbenzolsulfonat, Hexafluorophosphat, Hexafluoroarsenat, Hexafluorosilicat, 7,8- oder 7,9-Dicarbanido-undecaborat(-1) oder (-2), die gegebenenfalls an den B- und/oder C-Atomen durch eine oder zwei Methyl-, Ethyl-, Butyl- oder Phenyl-Gruppen substituiert sind, Dodecahydro-dicarbadodecaborat(-2) oder B-Methyl-C-phenyl-dodecahydro-dicarbadodecaborat(-1).

Das Leitsalz kann auch aus den Gegenionen von OX₂²⁺ und RED₁ⁿ⁻ entstehen.

Die Leitsalze werden vorzugsweise im Bereich 0 bis 1 mol/1 eingesetzt.

Als weitere Zusätze können Verdicker eingesetzt werden, um die Viskosität der elektroaktiven Lösung zu steuern. Das kann Bedeutung haben zur Vermeidung von Segretation, d.h. der Bildung von streifiger oder fleckiger Farbbildung bei längerem Betrieb der elektrochromen Vorrichtung im eingeschalteten Zustand, und zur Steuerung der Ausbleichgeschwindigkeit nach Abschalten des Stroms.

Als Verdicker eignen sich alle für diesen Zweck üblichen Verbindungen wie z.B. Polyacrylat, Polymethacrylat (Luctite L ® ), Polycarbonat oder Polyurethan.

Als weitere Zusätze für die elektrochrome Lösung kommen zum fallweise erwünschten Schutz vor UV-Licht UV-Absorber in Frage. Beispiele sind UVINUL® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company), UVINUL® 3035 (Ethyl-2-cyano-3,3-diphenylacrylat, BASF), UVINUL® 3039 (2-Ethylhexyl-2-cyano-3,3-diphenylacrylat, BASF), UVINUL® 3088 (2-Ethylhexyl-p-methoxycinnamat, BASF), CHIMASSORB® 90 (2-Hydroxy-4-methoxy-benzophenon, Ciba), 3,3-Dimethyl-5,6-dimethoxyindan-1-yliden-cyanessigsäurepropylester.

Bevorzugt sind die fünf Letztgenannten. Ebenfalls bevorzugt sind Mischungen von UV-Absorbern, beispielsweise der fünf Letztgenannten. Besonders bevorzugt ist die Mischung aus UVINUL® 3039 (BASF) und CHIMASSORB® 90 und 3,3-Dimethyl-5,6-dimethoxyindan-1 -yliden-cyanessigsäurepropylester.

Die UV-Absorber werden im Bereich 0.01 bis 2 mol/l, vorzugsweise 0.04 bis 1 mol/l eingesetzt.

Die UV-Absorber können auch in den Platten oder Folien der elektrochromen Vorrichtung oder in einer Beschichtung dieser Platten oder Folien enthalten sein. In diesen Anwendungsformen sind auch anorganische Nanoteilchen als UV-Absorber gut geeignet. Zusätzlich können eventuell andere Lichtschutzmaterialien wie Quencher oder Radikalfänger verwendet werden, wie sie im Kunststoffbereich üblich sind, z. B. UVINUL® 4049H (BASF), UVINUL® 4050H (BASF).

Die elektrochrome Lösung enthält die elektrochromen Substanzen OX₂ⁿ⁺ und RED₁^{m-}, insbesondere die der Formeln (I), (II) und (XV), worin RED_{1'} einem Rest der Formeln (XX), (XXII) und (XXVI) entspricht, jeweils in einer Konzentration von mindestens 10⁻⁴ mol/l, vorzugsweise 0.001 bis 0.5 mol/l. Die Gesamtkonzentration aller enthaltenen elektrochromen Substanzen liegt vorzugsweise unter 1 mol/l.

Zum Betrieb der erfindungsgemäßen elektrochromen Vorrichtung wird ein konstanter, gepulster oder in seiner Amplitude sich verändernder, beispielsweise sich sinusförmig verändernder, Gleichstrom benutzt. Die Spannung hängt ab von der gewünschten Farbtiefe, insbesondere aber von den Reduktions- bzw. Oxidationspotentialen der verwendeten OX₂ⁿ⁺ und RED₁^{m-}. Solche Potentiale können beispielsweise aus Topics in Current Chemistry, Volume 92, S. 1-44, (1980) oder Angew. Chem. 90, 927 (1978) oder der dort zitierten Literatur entnommen werden. Die Differenz ihrer Potentiale ist ein Richtwert für die erforderliche Spannung, jedoch kann die elektrochrome Vorrichtung bereits bei niedrigerer oder auch mit höherer Spannung betrieben werden. In vielen Fällen, z. B. bei Verwendung von OX₂ⁿ⁺ = Formel (Ia) und RED₁^{m-} = Formel (XXVIa) liegt diese zum Betrieb nötige Potentialdifferenz ≤ 1V. Solche elektrochromen Vorrichtungen können deshalb in einfacher Weise mit dem Strom aus photovoltaischen Siliciumzellen versorgt werden.

Wird die Spannung abgeschaltet, geht die erfindungsgemäße elektrochrome Vorrichtung wieder in ihren ursprünglichen Zustand zurück. Diese Löschung kann erheblich beschleunigt werden, wenn die kontaktierten Segmente bzw. Platten kurzgeschlossen werden. Auch durch mehrmaliges Umpolen der Spannung, gegebenenfalls auch bei gleichzeitiger Erniedrigung der Spannung, kann die Anzeige sehr rasch gelöscht werden.

Durch Variation der Schichtdicke der elektrochromen Vorrichtung, der Viskosität der elektrochromen Lösung und/oder der Diffusions- oder Driftfähigkeit der elektrochromen Substanzen lassen sich die Einschalt- und Ausschaltzeiten der Anzeigevorrichtung in weiten Grenzen beeinflussen. So zeigen beispielsweise dünne Schichten kürzere Schaltzeiten als dicke. Es lassen sich also schnell und langsam schaltbare Vorrichtungen bauen und so den jeweiligen Einsatzzwecken optimal anpassen.

Bei langsamen Vorrichtungen, insbesondere Anzeigevorrichtungen, kann zur Aufrechterhaltung der angezeigten Information im eingeschalteten Zustand ein Stromspar- oder Refresh-Mode benutzt werden. Nach Aufbau der anzuzeigenden Information beispielsweise durch konstante oder sich mit hoher Frequenz verändernder oder gepulster Gleichspannung ausreichender Höhe wird auf gepulste oder sich verändernde Gleichspannung niedriger Frequenz umgeschaltet, wobei während der Phasen, in denen die Spannung Null beträgt, die Kontaktierung der Segmente nicht kurzgeschlossen wird. Diese niedrige Frequenz kann beispielsweise im Bereich von 10 Hz oder niedriger liegen, wobei die Dauer der Einschalt- und Ausschaltphasen nicht gleichlang zu sein brauchen, sondern beispielsweise die Ausschaltphasen deutlich länger sein können. Da sich während der Strompausen im nicht kurzgeschlossenen Zustand die Farbtiefe der angezeigten Information nur langsam abbaut, genügen relativ kurz Stromimpulse, um diese Verluste in der anschließenden Refresh-Phase wieder auszugleichen. Man erhält so ein flackerfreies Bild mit nahezu konstanter Farbtiefe, für dessen Aufrechterhaltung aber nur ein Bruchteil des Stromes benötigt wird, der bei permanentem Stromfluß anfallen würde.

Gegenüber elektrochromen Anzeigevorrichtungen, wie sie aus dem oben zitierten Stand der Technik bekannt sind, zeigen die erfindungsgemäßen Anzeigevorrichtungen folgende Vorteile:
1. Die an Spannung angelegten Segmente zeigen gleichermaßen eine scharfkantige Farbbegrenzung, sowohl bei den an der Kathode, als auch bei den an der Anode, gebildeten farbigen Verbindungen. Bei Vorrichtungen des Standes der Technik ist die Kantenschärfe an der Anode in der Regel mangelhaft.
2. Auch nach längerem Betrieb mit Gleichspannung konstanter Polung löscht die Anzeigevorrichtung, nach Abschalten des Stromes und eventuell Kurzschließen der Anschlüsse oder kurzen Spannungspulsen entgegengesetzten Vorzeichens, ebenso rasch wie bei kurzzeitigem Betrieb und geht in den Farbzustand der ungeschalteten Zelle zurück (z. B. farblos). Bei Vorrichtungen des Standes der Technik erfolgt eine solche Löschung bei kurzzeitigem Betrieb zwar ebenfalls rasch und vollständig, bei längerem Betrieb wird aber in kurzer Zeit nur ein Teil der Färbung gelöscht. Die Löschung der Restfärbung dauert dann verhältnismäßig lange, da insbesondere die an der Anode gebildeten farbigen Verbindungen weit über die Grenzen der geschalteten Segmente hinausdiffundiert sind.

Spezielle Ausführungsformen der obengenannten Typen 1 und 2 können beispielsweise die folgenden sein, die ebenfalls Gegenstand der Erfindung sind, wenn sie ein erfindungsgemäßes Paar elektrochromer Verbindungen enthalten.

### Typ 1: (unverspiegelt)

aus dem Bereich Lichtschutz/Lichtfilter: Fensterscheiben für z.B. Gebäude, Straßenfahrzeuge, Flugzeuge, Eisenbahnen, Schiffe, Dachverglasungen, Autosonnendächer, Verglasung von Gewächshäusern und Wintergärten, Lichtfilter beliebiger Art;
aus dem Bereich Sicherheit/Geheimhaltung: Trennscheiben für z.B. Raumteiler in z.B. Büros, Straßenfahrzeugen, Flugzeugen, Eisenbahnen, Sichtschutzscheiben an z.B. Bankschaltern, Türverglasungen, Scheiben für z.B. Motorrad- oder Pilotenhelme;
aus dem Bereich Design: Verglasung von Backöfen, Mikrowellengeräten, anderen Haushaltsgeräten, Möbeln.

Aus dem Bereich Anzeigen: analoge Spannungsanzeigen, z. B. als Batterietester, Tankanzeigen, Temperaturanzeigen, usw.

### Typ 1: (verspiegelt)

Spiegel jeglicher Art, z.B. für Straßenfahrzeuge, Eisenbahnen, insbesondere plane, spärische, asphärische Spiegel und Kombinationen daraus, z.B. spärisch/asphärisch, Spiegelverglasung in Möbeln.

### Typ 2:

Anzeigevorrichtungen jeglicher Art, z.B. Segment- oder Matrixanzeigen, z.B. für Uhren, Computer, Elektrogeräte, Elektronikgeräte wie Radios, Verstärker, Fernseher, CD-Player etc., Zielanzeige in Bussen und Zügen, Abfahrts- oder Abfluganzeigen in Bahnhöfen und Flughäfen, Flachbildschirme, alle Anwendungen, die unter Typ 1 und 2 genannt sind, die mindestens eine schaltbare, statische oder variable Anzeigevorrichtung enthalten, z.B. Trennscheiben, die Anzeigen wie z.B. "Bitte nicht stören", "Schalter nicht besetzt" enthalten, z.B. Auto-Spiegel, die Anzeigen beliebiger Art enthalten, wie z.B. Anzeige der Temperatur, Störungen im Fahrzeug (z.B. Öltemperatur, offene Türen), Zeit, Himmelsrichtung etc.

### Beispiele

### Beispiel 1

6,5 g Phenazin wurden unter Stickstoffatmosphäre in einer Mischung aus 35 ml Acetonitril und 1 ml Wasser gelöst. Nacheinander wurden 9 ml Butansulton, 7,7 g wasserfreies Natriumcarbonat, 7,2 g Natriumdithionit und 1,3 g Tetrabutylammoniumbromid zugesetzt. 18 h wurde bei Rückflusstemperatur unter Stickstoffatmosphäre gerührt. Dann wurde die dicke Suspension mit 40 ml Wasser verdünnt und mit weiteren 9 ml Butansulton, 7,7 g Natriumcarbonat und 7,2 g Natriumdithionit versetzt und weitere 15 h bei Rückflusstemperatur gerührt. Nach dem Abkühlen wurde von Salzen abfiltriert. Beim Stehen über Nacht unter Stickstoffatmosphäre fiel ein bräunliches Pulver aus, das abgesaugt wurde. Es wurde mit 20 ml Toluol kurz aufgekocht, abgekühlt, erneut abgesaugt, mit Toluol gewaschen und getrocknet. Man erhielt 5,4 g (30 % d. Th.) des Phenazins der Formel 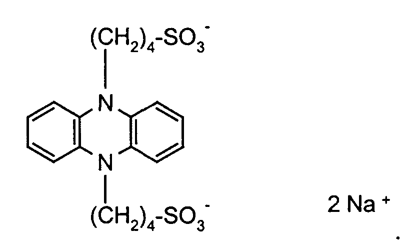
- MS (ESI):: m/e = 475 (M²⁻+Na⁺), 452 (M⁻), 226 (M²⁻) mit M²⁻ = dem Dianion der oben stehenden Formel.

### Beispiel 2

Zwei mit ITO beschichtete Glasplatten (50x45 mm²) wurden auf der ITO-beschichteten Seite mit einem Klebebandstreifen (Tesapack 124 der Fa. Beiersdorf, Hamburg), der ca. 7 mm breit war, in der Mitte über die ganze Breite der Platte abgeklebt. Die so vorbereiteten Glasplatten wurden in ein wässriges Bad mit 47,5 %iger konzentrierter Salzsäure und 5 % Eisen(III)-Chlorid gegeben, das auf ca. 40°C aufgeheizt war. Nach 10 min wurden die Glasplatten entnommen und mit destilliertem Wasser abgespült. Der Klebestreifen wurde entfernt. Man erhielt so zwei Glasplatten (1) und (4), die nur einen 50x7 mm² großen ITO-Streifen (2) und (5) trugen.

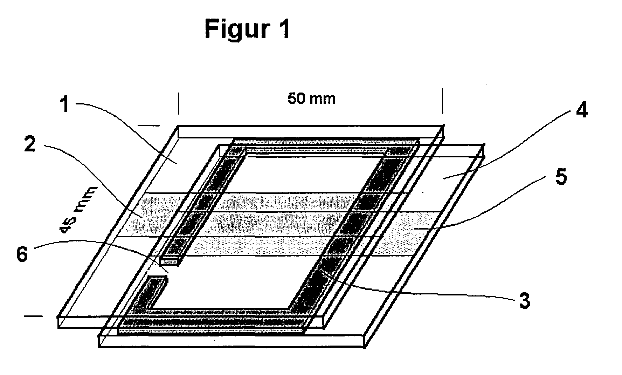

Eine Mischung aus 97 % photohärtendem Epoxikleber DELO-Katiobond® 4594, DELO Industrieklebstoffe, Landsberg, und 3 % Glaskugeln mit 100 µm Durchmesser wurde ringförmig (3) auf die mit ITO-beschichtete Seite der Glasplatte (4) aufgetragen, wobei eine Öffnung (6) ausgespart wurde. Nun wurde die Glasplatte (1) so auf die Kleberaupe gelegt, dass die ITO-Schichten der beiden Platten (1) und (4) einander zugewandt waren und die beiden ITO-Streifen (2) und (5) deckungsgleich exakt übereinander zu liegen kamen. Die Aushärtung des Klebers erfolgte durch 10-minütiges Belichten mit Tageslicht in der Nähe eines Fensters und anschließend für 20 min bei 105°C ohne Belichtung. Man erhielt so eine Zelle, wie sie in Figur 1 dargestellt ist.

Dann wurde die Zelle unter Stickstoffatmosphäre mit der Öffnung (6) nach unten senkrecht in eine Schale gestellt, die eine Lösung enthielt, die 0,02 molar an der elektrochromen Verbindung der Formel 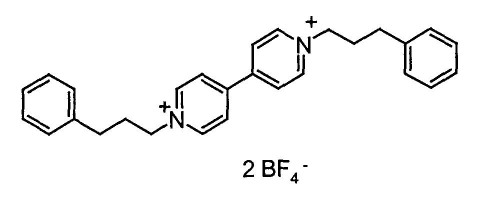 sowie 0,02 molar an der elektrochromen Verbindung der Formel 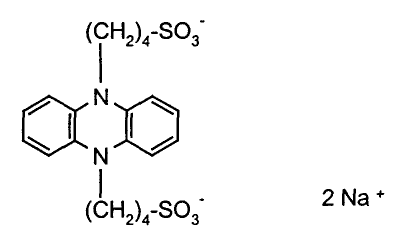 und schließlich 0,2 molar an UV-Absorber der Formel 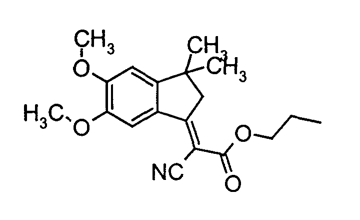 in wasserfreiem, sauerstofffreiem N-Methylpryrrolidon war. Dabei befand sich die Öffnung (6) der Zelle unterhalb des Flüssigkeitsspiegels in der Schale. Die Schale mit der Zelle wurde in einen Exsiccator gestellt. Dieser wurde auf 0.05 mbar evakuiert und anschließend vorsichtig mit Stickstoff belüftet. Während der Belüftung stieg die elektrochrome Lösung in die Zelle hinein und füllte bis auf eine kleine Blase das gesamte Volumen aus. Die Zelle wurde aus der Lösung entnommen, unter Stickstoffatmoshäre an der Öffnung (6) gereinigt, indem sie mit einem Papiertuch abgeputzt wurde, und anschließend mit dem photohärtenden Epoxikleber DELO-Katiobond® 4594, DELO Industrieklebstoffe, Landsberg, verdickt mit 2 % Kieselgel-Aerosil, verschlossen. Zuletzt wurde 10 min mit Tageslicht in der Nähe eines Fensters belichtet und bei Raumtemperatur über Nacht ausgehärtet.

### Beispiel 3 (Vergleichsbeispiel)

Es wurde eine Zelle hergestellt wie in Beispiel 2 beschrieben, jedoch wurde eine Lösung verwendet, die statt der elektrochromen Verbindung der Formel 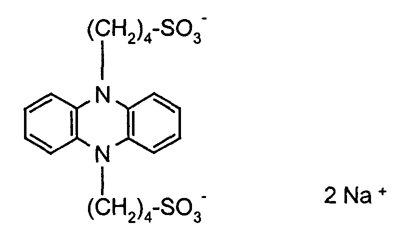 die elektrochrome Verbindung der Formel 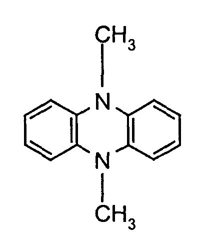 (ebenfalls 0,02 molar) enthielt.

### Vergleich der Zellen gemäß Beispiel 2 und 3

Beide Zellen waren im ungeschalteten Zustand schwach gelblich gefärbt.

Anlegen einer Spannung von 1,2 V an die beiden rechteckigen ITO-Streifen (2) und (5) der Zelle gemäß Figur 1 ergab in beiden Fällen einen blaustichig grün gefärbten Streifen mit scharfen Rändern. Die Teile der Zelle außerhalb dieses Streifens blieben ungefärbt. Abklemmen und Kurzschließen der Streifen (2) und (5) führte zur sofortigen Löschung der Färbung.

Wurden die Zellen jedoch längere Zeit (20 min und 2 h) mit 1,2 V betrieben, so ergab sich bei den beiden Zellen ein unterschiedliches Bild:
- Zelle gemäß Beispiel 2:: Der blaustichig grüne Streifen blieb nach 20 min und 2 h Betrieb randscharf, und die Zellenteile außerhalb blieben ungefärbt. Nach Abklemmen der Spannung und Kurzschließen war der Streifen nach 20 s entfärbt.
- Zelle gemäß Beispiel 3:: Seitlich des blaustichig grünen Streifens zeigte sich beidseitig bereits nach 20 min Betrieb eine grünlich gelbe Zone. Nach 2 h Betrieb war der gesamte Teil der Zelle außerhalb des Streifens grünlich gelb gefärbt. Der Streifen selbst zeigte nun eine grünlich blaue Färbung. Nach Abklemmen der Spannung und Kurzschließen dauerte die komplette Entfärbung des Streifens nach 20 min Betrieb 5 min, nach 2 h Betrieb bereits 15 min.

Folglich zeigt nur die erfindungsgemäße Zelle 2 auch bei längerem Betrieb ein randscharfes Bild des geschalteten Segments und eine rasche Löschung nach Abschalten des Stroms und Kurzschluss.

### Beispiel 4

Ganz analog zu Beispiel 2 wurde eine Zelle gebaut, die eine Lösung enthielt, die 0,002 molar an der elektrochromen Verbindung der Formel 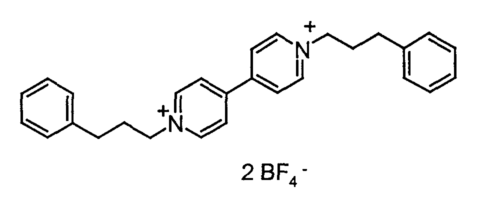 sowie 0,002 molar an der elektrochromen Verbindung der Formel 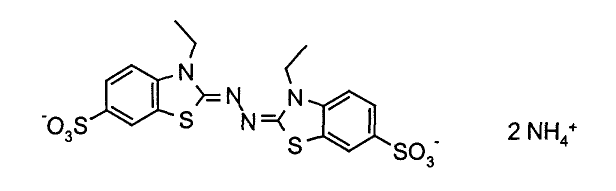 in wasserfreiem, sauerstofffreiem N-Methylpryrrolidon war.

### Beispiel 5 (Vergleichsbeispiel)

Ganz analog zu Beispiel 4 wurde eine Zelle gebaut, die aber statt der elektrochromen Verbindung der Formel 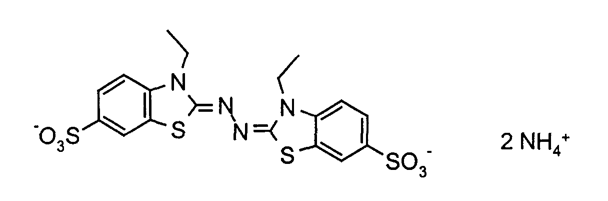 0,002 molar an der elektrochromen Verbindung der Formel 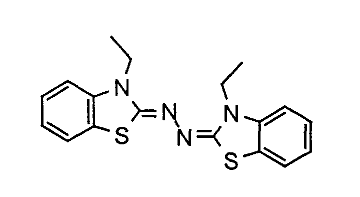 war.

### Vergleich der Zellen gemäß Beispiel 4 und 5

Beide Zellen waren im ungeschalteten Zustand schwach gelblich gefärbt.

Anlegen einer Spannung von 1,4 V an die beiden rechteckigen ITO-Streifen (2) und (5) der Zelle gemäß Figur 1 ergab in beiden Fällen einen blau gefärbten Streifen mit scharfen Rändern. Die Teile der Zelle außerhalb dieses Streifens blieben ungefärbt. Abklemmen und Kurzschließen der Streifen (2) und (5) führte zur sofortigen Löschung der Färbung.

Wurden die Zellen jedoch längere Zeit (20 min und 2 h) mit 1,4 V betrieben, so ergab sich bei den beiden Zellen ein unterschiedliches Bild:
- Zelle gemäß Beispiel 4:: Der blaue Streifen blieb nach 20 min und 2 h Betrieb randscharf, und die Zellenteile außerhalb blieben ungefärbt. Nach Abklemmen der Spannung und Kurzschließen war der Streifen nach 20 s entfärbt.
- Zelle gemäß Beispiel 5:: Seitlich des blauen Streifens zeigte sich beidseitig bereits nach 20 min Betrieb eine schwach grünlich gelbe Zone. Nach 2 h Betrieb war der gesamte Teil der Zelle außerhalb des Streifens schwach grünlich gelb gefärbt. Nach Abklemmen der Spannung und Kurzschließen dauerte die komplette Entfärbung des Streifens nach 20 min Betrieb 5 min, nach 2 h Betrieb bereits 15 min.

Folglich zeigt nur die erfindungsgemäße Zelle 4 auch bei längerem Betrieb ein randscharfes Bild des geschalteten Segments und eine rasche Löschung nach Abschalten des Stroms und Kurzschluss.

## Patentansprüche

1. Elektrochrome Vorrichtung, enthaltend ein Paar Glas- oder Kunststoffplatten oder Kunststoffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt sein kann, wobei die Platten oder Folien über einen Dichtungsring auf den Seiten ihrer leitfähigen Beschichtung zusammengefügt sind, und das Volumen, gebildet aus den beiden Platten oder Folien und dem Dichtungsring, mit einem elektrochromen Medium gefüllt ist, **dadurch gekennzeichnet, dass** das elektrochrome Medium ein Paar elektrochromer Substanzen OX₂ⁿ⁺ und RED₁^{m-} enthält,
worin
n und m unabhängig voneinander eine ganze Zahl von 2 bis 4 bedeuten.

2. Elektrochrome Vorrichtung gemäß Anspruch 1, **dadurch gekennzeichnet, dass** wenigstens bei einer der beiden Platten oder Folien die elektrisch leitfähige Schicht in getrennte, einzeln kontaktierte Flächensegmente aufgeteilt ist.

3. Elektrochrome Vorrichtung gemäß einem der Ansprüche 1 oder 2, **dadurch gekennzeichnet, dass** n und m 2 bedeuten.

4. Elektrochrome Vorrichtung gemäß einem oder mehrerer der Ansprüche 1 bis 3, **dadurch gekennzeichnet, dass** als elektrochrome Substanzen der Formel OX₂ⁿ⁺ solche der Formeln 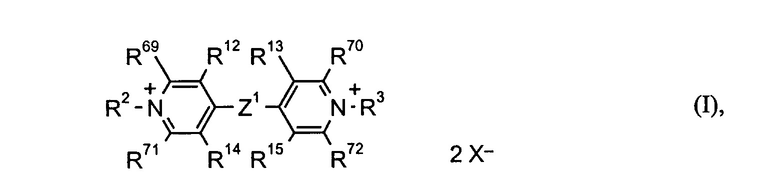 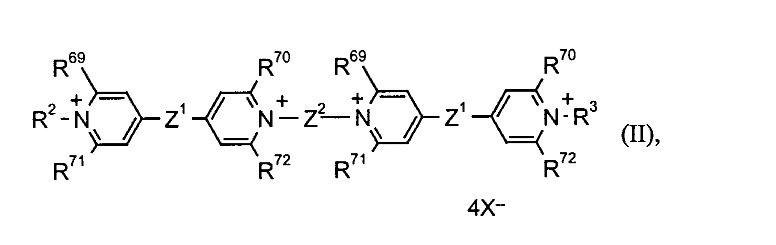 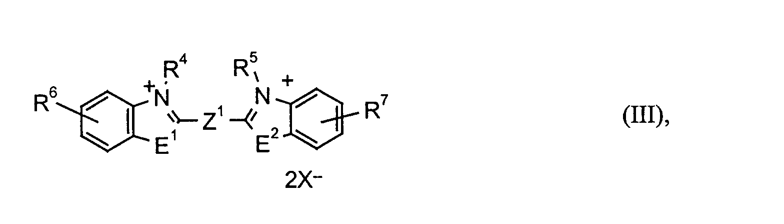 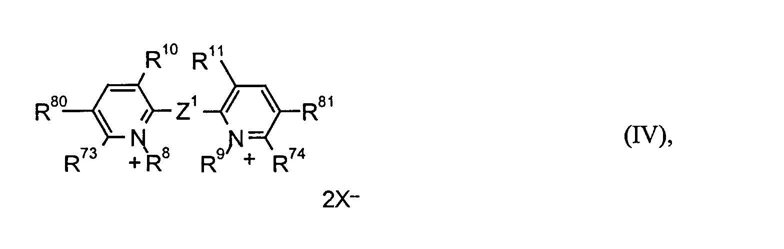 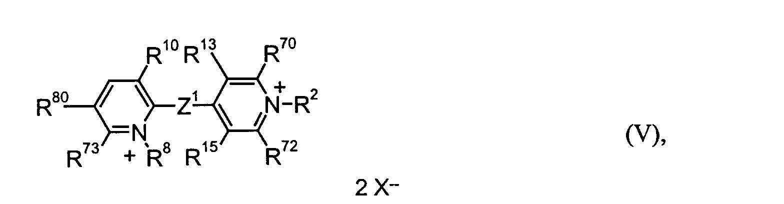 worin
R² bis R⁵, R⁸ und R⁹ unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten oder
R⁴; R⁵ bzw. R⁸; R⁹ gemeinsam eine -(CH₂)₂- oder -(CH₂)₃-Brücke bilden können,
R⁶ und R⁷ unabhängig voneinander Wasserstoff, C₁- bis C₄-Alkyl, C₁- bis C₄-Alkoxy, Halogen, Cyan, Nitro oder C₁- bis C₄-Alkoxycarbonyl bedeuten,
R¹⁰; R¹¹, R¹⁰; R¹³, R¹²; R¹³ und R¹⁴; R¹⁵ unabhängig voneinander Wasserstoff oder paarweise eine -(CH₂)₂-, -(CH₂)₃- oder -CH=CH-Brücke bedeuten,
R⁶⁹ bis R⁷⁴, R⁸⁰ und R⁸¹ unabhängig voneinander Wasserstoff oder C₁- bis C₆-Alkyl bedeuten und
R⁶⁹ bis R⁷⁴ unabhängig voneinander zusätzlich Aryl bedeuten oder
R⁶⁹; R¹², R⁷⁰; R¹³, R⁷³; R⁸⁰ und/oder R⁷⁴; R⁸¹ gemeinsam eine -CH=CH-CH=CH-Brücke bilden,
E¹ und E² unabhängig voneinander O, S, NR¹ oder C(CH₃)₂ bedeuten oder
E¹ und E² gemeinsam eine -N-(CH₂)₂-N-Brücke bilden,
R¹ C₁- bis C₁₈-Alkyl, C₂- bis C₁₂-Alkenyl, C₄- bis C₇-Cycloalkyl, C7- bis C₁₅-Aralkyl, C₆- bis C₁₀-Aryl bedeutet,
Z¹ eine direkte Bindung, -CH=CH-, -C(CH₃)=CH-, -C(CN)=CH-,-CCl=CCl-, -C(OH)=CH-, -CCL=CH-, -C≡C-, -CH=N-N=CH-, -C(CH₃)=N-N=C(CH₃)-, -CCI=N-N=CCI- oder -C₆H₄- bedeutet,
Z² -(CH₂)ᵣ- oder -CH₂-C₆H₄-CH₂- bedeutet,
r eine ganze Zahl von 1 bis 10 bedeutet und
X⁻ ein unter den Bedingungen redox-inertes Anion bedeutet,
verwendet werden.

5. Elektrochrome Vorrichtung gemäß einem oder mehrerer der Ansprüche 1 bis 3, **dadurch gekennzeichnet, dass** als elektrochrome Substanzen der Formel RED₁^{m-} solche der Formeln 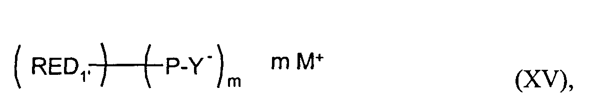 worin
RED_{1'} den m-wertigen Rest einer reversibel oxidierbaren elektrochromen Verbindung bedeutet,
P eine Brücke bedeutet,
Y⁻ eine anionische Gruppierung bedeutet,
M⁺ ein Kation bedeutet und
m eine ganze Zahl von 2 bis 4, vorzugsweise 2 bedeutet,
verwendet werden.

6. Elektrochrome Vorrichtung gemäß Anspruch 5, **dadurch gekennzeichnet, dass**
P eine direkte Bindung, -(CH₂)ₚ- oder -C₆H₄- bedeutet,
p eine ganze Zahl von 1 bis 12 bedeutet,
Y⁻ SO₃⁻, OSO₃⁻, COO⁻, PO₃⁻, OPO₂⁻ oder für einen Rest der Formel 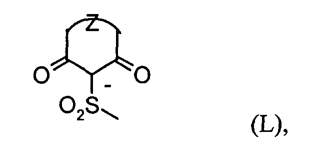
oder einer mesomeren Form davon bedeutet,
worin
Z für eine Brücke steht, beispielsweise für ―O-C(R¹⁰¹R¹⁰²)-O-, -N(R¹⁰³)-CO-N(R¹⁰⁴)-, -N(R¹⁰³)-SO₂-N(R¹⁰⁴)- steht,
wobei
R¹⁰¹ bis R¹⁰⁴ unabhängig voneinander für Alkyl oder Aryl stehen und
M⁺ ein Ion eines Alkalimetalls, ein Ammoniumion oder für ein Äquivalent von OX₂^{m+} bedeutet.

7. Elektrochrome Vorrichtung gemäß Anspruch 5 oder 6, **dadurch gekennzeichnet, dass**
RED_{1`} einen Rest der Formeln 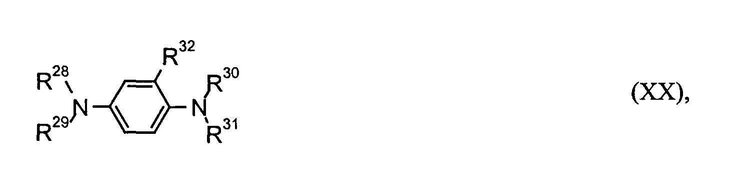 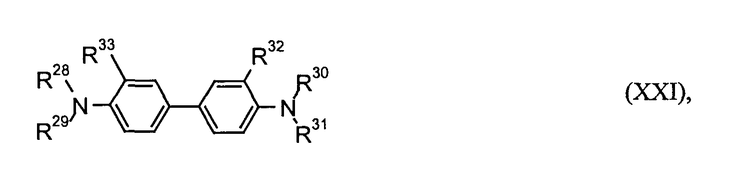 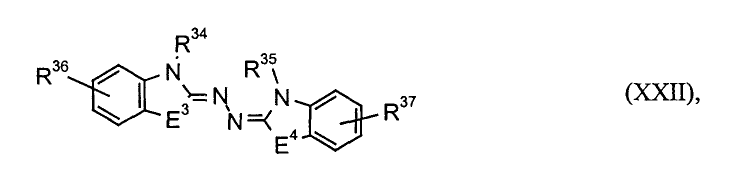 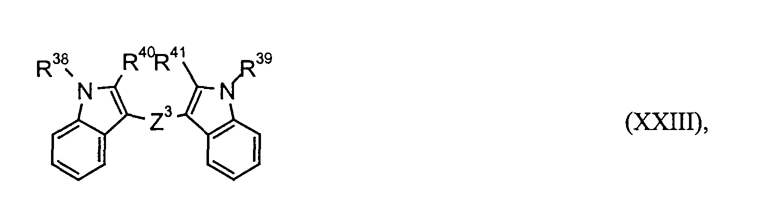 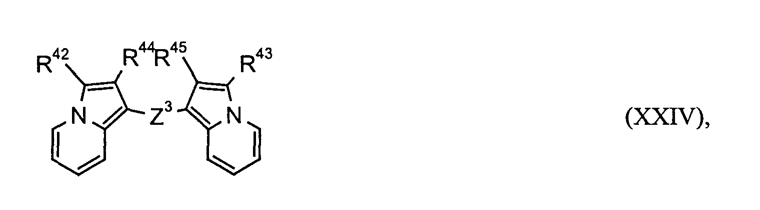 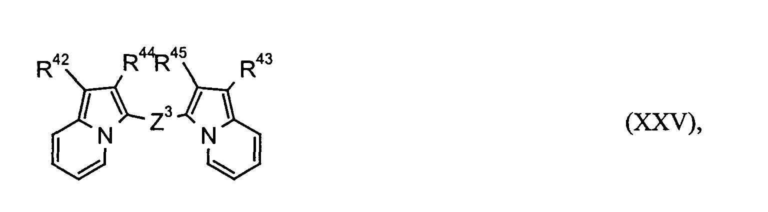 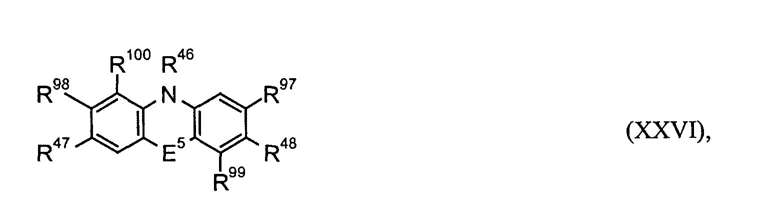 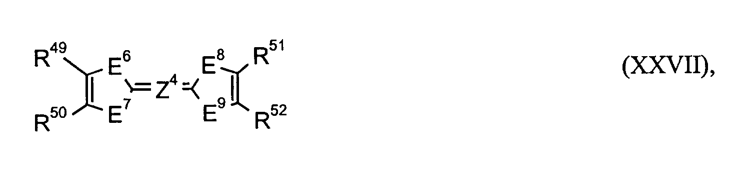 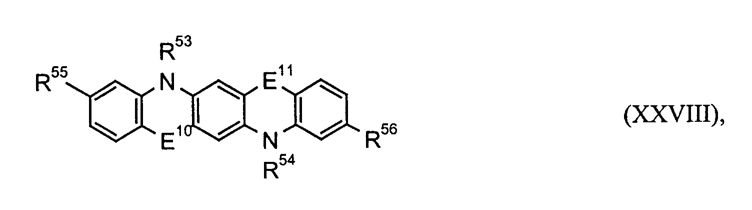 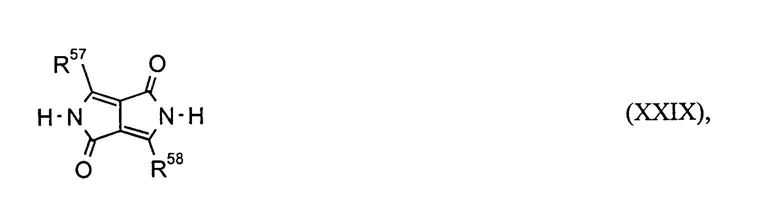 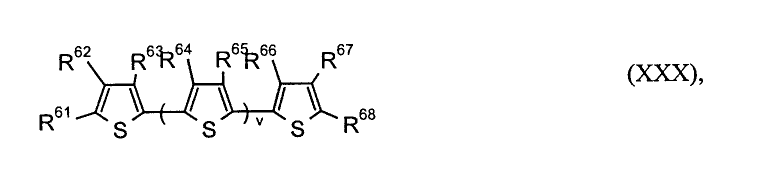 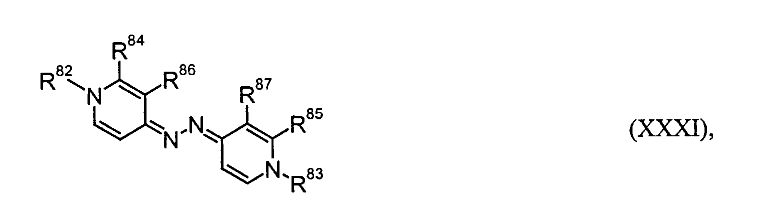 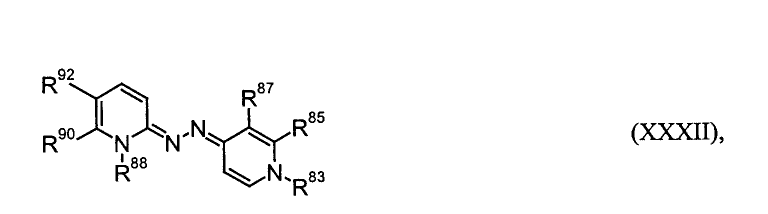 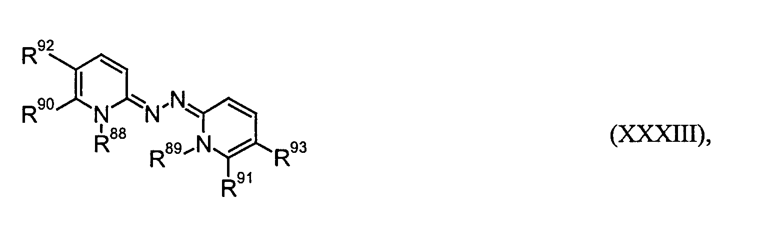 oder Ferrocen
bedeutet,
worin
R²⁸ bis R³¹, R³⁴, R³⁵, R³⁸, R³⁹, R⁴⁶, R⁵³ und R⁵⁴ unabhängig voneinander C₁-bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
R³², R³³ R³⁶, R³⁷, R⁴⁰, R⁴¹, R⁴² bis R⁴⁵, R⁴⁷, R⁴⁸, R⁴⁹ bis R⁵², R⁵⁵ bis R⁵⁸ und R⁹⁷ bis R¹⁰⁰ unabhängig voneinander Wasserstoff, C₁- bis C₄-Alkyl, C₁- bis C₄-Alkoxy, Halogen, Cyan, Nitro, C₁- bis C₄-Alkoxycarbonyl, C₆- bis C₁₀-Aryl oder C₆- bis C₁₀-Aryloxy bedeuten
und
R⁵⁷ und R⁵⁸ zusätzlich einen aromatischen oder quasiaromatischen fünf- oder sechsgliedrigen heterocyclischen Ring, der gegebenenfalls benzanneliert ist, bedeuten und R⁴⁸ zusätzlich NR⁷⁵R⁷⁶ bedeutet oder
R⁴⁹; R⁵⁰, R⁵¹; R⁵² und/oder R⁴⁸; R⁹⁷ oder R⁴⁸; R⁹⁹, R⁹⁷; R⁹⁸ oder R⁹⁸; R¹⁰⁰ unabhängig voneinander eine -(CH₂)₃-, -(CH₂)₄-, -(CH₂)₅- oder -CH=CH-CH=CH-Brücke bilden,
Z³ eine direkte Bindung, eine -CH=CH- oder -N=N-Brücke bedeutet,
=Z⁴= eine direkte Doppelbindung, eine =CH-CH= oder =N-N=-Brücke bedeutet,
E³ bis E⁵, E¹⁰ und E¹¹ unabhängig voneinander O, S, NR⁵⁹ oder C(CH₃)₂ bedeuten und
E⁵ zusätzlich C=O oder SO₂ bedeutet,
E³ und E⁴ unabhängig voneinander zusätzlich -CH=CH- bedeuten können,
E⁶ bis E⁹ unabhängig voneinander S, Se oder NR⁵⁹ bedeuten,
R⁵⁹, R⁷⁵ und R⁷⁶ unabhängig voneinander C₁- bis C₁₂-Alkyl, C₂- bis C₈-Alkenyl, C₄- bis C₇-Cycloalkyl, C₇- bis C₁₅-Aralkyl, C₆-bis C₁₀-Aryl bedeuten,
und
R⁷⁵ zusätzlich Wasserstoff bedeutet oder R⁷⁵ und R⁷⁶ in der Bedeutung von NR⁷⁵R⁷⁶ gemeinsam mit dem N-Atom, an das sie gebunden sind, einen fünf- oder sechsgliedrigen Ring bedeuten, der gegebenenfalls weitere Heteroatome enthält,
R⁶¹ bis R⁶⁸ unabhängig voneinander Wasserstoff, C₁- bis C₆-Alkyl, C₁- bis C₄-Alkoxy, Cyan, C₁- bis C₄-Alkoxycarbonyl oder C₆- bis C₁₀-Aryl bedeuten und
R⁶¹; R⁶² und R⁶⁷; R⁶⁸ unabhängig voneinander zusätzlich eine -(CH₂)₃-, -(CH₂)₄- oder -CH=CH-CH=CH-Brücke bilden oder
R⁶²; R⁶³, R⁶⁴; R⁶⁵ und R⁶⁶; R⁶⁷ eine -O-CH₂CH₂-O- oder -O-CH₂CH₂CH₂-O-Brücke bilden,
v eine ganze Zahl zwischen 0 und 100 bedeutet,
R⁸², R⁸³, R⁸⁸ und R⁸⁹ unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
R⁸⁴ bis R⁸⁷ und R⁹⁰ bis R⁹³ unabhängig voneinander Wasserstoff oder C₁- bis C₆-Alkyl bedeuten oder
R⁸⁴; R⁸⁶, R⁸⁵; R⁸⁷, R⁹⁰; R⁹² und/oder R⁹¹; R⁹³ gemeinsam eine -CH=CH-CH=CH-Brücke bilden und
alle Reste zusätzlich eine direkte Bindung zu P bedeuten können.

8. Elektrochrome Vorrichtung gemäß einem oder mehrerer der Ansprüche 1 bis 7, **dadurch gekennzeichnet, dass** sie in dem elektrochromen Medium eine elektrochrome Substanz der Formel OX₂²⁺ RED₁²⁻ enthält.

9. Elektrochrome Substanzen der Formel 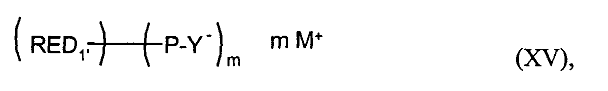 worin
RED_{1'}, P, Y⁻, m und M⁺ die in den Ansprüchen 5, 6 und 7 angegebene Bedeutung besitzen und die Verbindungen der Formeln 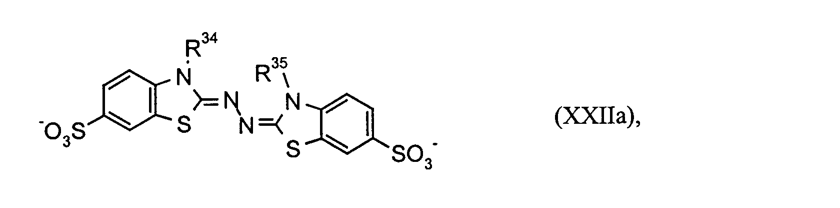 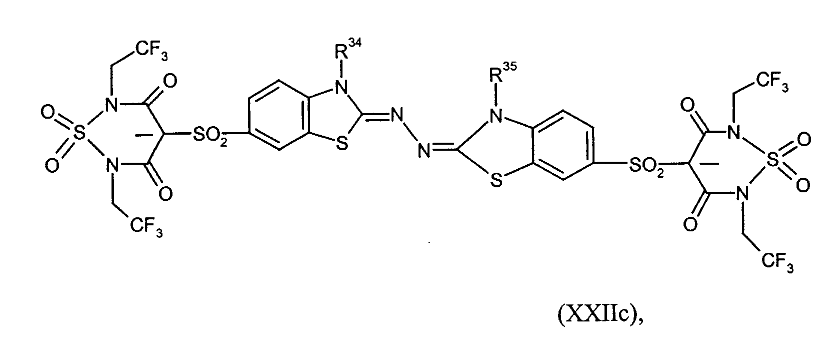 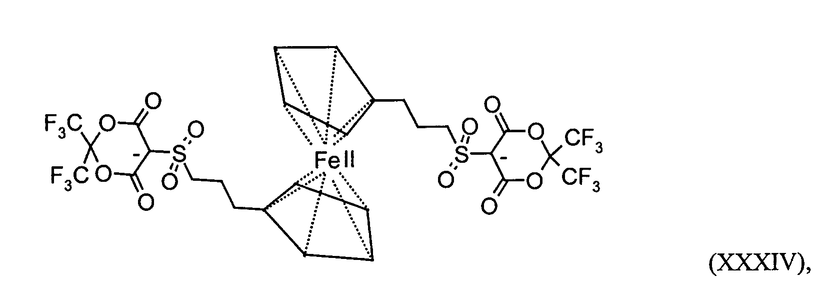
worin
R³⁴ und R³⁵ Ethyl bedeuten,
ausgenommen sind.

10. Elektrochrome Substanzen der Formel 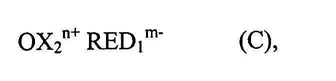 worin
RED₁^{m-} und OX₂ⁿ⁺ die in den Ansprüchen 4 bis 7 angegebene Bedeutung besitzen und
m und n 2 bedeuten.
